# EUROPÄISCHE PATENTSCHRIFT

(11) **EP 4 150 370 B1**
(45) Veröffentlichungstag und Bekanntmachung des Hinweises auf die Patenterteilung: **30.07.2025**
(21) Anmeldenummer: 21725155.2
(22) Anmeldetag: 11.05.2021
(51) Int. Cl.: G01S 7/497

(54) **VERFAHREN ZUM KALIBRIEREN UND/ODER JUSTIEREN UND STEUEREINHEIT FÜR EIN LIDAR-SYSTEM, LIDAR-SYSTEM UND ARBEITSVORRICHTUNG**
METHOD FOR CALIBRATING AND/OR ADJUSTING, AND CONTROL UNIT FOR A LIDAR SYSTEM, LIDAR SYSTEM, AND WORKING DEVICE
PROCÉDÉ D'ÉTALONNAGE ET/OU DE RÉGLAGE, ET UNITÉ DE COMMANDE POUR UN SYSTÈME LIDAR, SYSTÈME LIDAR ET DISPOSITIF DE TRAVAIL

(30) Priorität: 13.05.2020 DE 102020206006
(43) Veröffentlichungstag der Anmeldung: 22.03.2023
(73) Patentinhaber: Robert Bosch GmbH, 70442 Stuttgart (DE)
(72) Erfinder: LIETZ, Mario, 71665 Vaihingen An Der Enz (DE); NEUSTADT, Alf, 70180 Stuttgart (DE); SCHNITZER, Reiner, 72762 Reutlingen (DE)
(86) Internationale Anmeldenummer: PCT/EP2021/062421
(87) Internationale Veröffentlichungsnummer: WO 2021/228815

(56) Entgegenhaltungen:
- WO-A1-2018/234469
- DE-A1- 102009 047 303
- US-A1- 2017 124 781
- US-B1- 7 064 817
- FIORANI L ET AL: "Self-aligning lidar for the continuous monitoring of the atmosphere", APPLIED OPTICS, OPTICAL SOCIETY OF AMERICA, WASHINGTON, DC, US, vol. 37, no. 21, 20 July 1998 (1998-07-20), pages 4758 - 4764, XP002172245, ISSN: 0003-6935, DOI: 10.1364/AO.37.004758

## Beschreibung

### Stand der Technik

Die vorliegende Erfindung betrifft ein Verfahren zum Kalibrieren und/oder Justieren und eine Steuereinheit für ein LiDAR-System, ein LiDAR-System als solches sowie eine Arbeitsvorrichtung, welche mit einem LiDAR-System und insbesondere als Fahrzeug ausgebildet ist.

Zur Umfelderkennung von Arbeitsvorrichtungen und insbesondere von Fahrzeugen werden vermehrt so genannte LiDAR-Systeme (LiDAR: Light Detection and Ranging) eingesetzt, welche ausgebildet sind, ein Sichtfeld mit Licht oder Infrarotstrahlung zu beaufschlagen und von dem Sichtfeld zurückgeworfene Strahlung zur Analyse des Sichtfeldes und zur Detektion von darin enthaltenen Objekten zu erfassen und auszuwerten. Die Qualität der Umfelderkennung - insbesondere im Zusammenhang mit der gewünschten Reichweite der Detektion - hängt von der Qualität der Justage oder Ausrichtung der Sendereinheit und der Empfängereinheit in Bezug aufeinander ab. Folglich muss die entsprechende Ausrichtung bei der Montage und/oder beim Betrieb eines Lidar-Systems geprüft und gegebenenfalls angepasst werden.

Im Paper "Self-aligning lidar for the continuous monitoring of the atmosphere" von L. Fiorani et al. ist ein Verfahren zur Selbstjustage eines LiDAR-Systems beschrieben. Die US 2021/0025999 A1 beschreibt ein Verfahren zum Messen von Parametern eines oder mehrerer optischer Strahlen, die von einem optoelektronischen System emittiert werden, und ein zugehöriges Gerät. In der US 2017/124781 A1 werden verschiedene Ausführungsformen, welche sich im Allgemeinen auf autonome Fahrzeuge und zugehörige mechanische, elektrische und elektronische Hardware, Computersoftware und -systeme sowie drahtgebundene und drahtlose Netzwerkkommunikation zur Bereitstellung einer autonomen Fahrzeugflotte als Dienstleistung beziehen. Die US 7,064,817 B1 beschreibt ein Verfahren zur Ausrichtung eines Lasersendersystems und eines optischen Empfängersystems, bei dem eine Dämpfer-Reflektor-Baugruppe auf dem optischen Empfängersystem angebracht wird. Die DE 10 2009 047 303 A1 betrifft eine Kalibriereinrichtung für die Kalibrierung eines Sensors, insbesondere eines Lidarsensors. Die Kalibriereinrichtung umfasst ein Reflektormodul mit matrixartig angeordneten Reflektorelementen, sowie eine im Strahlengang zwischen dem Sensor und dem Reflektormodu vor dem Reflektormodul angeordnete Blendenmaske.

### Offenbarung der Erfindung

Das erfindungsgemäße Verfahren weist demgegenüber den Vorteil auf, dass mit besonders einfachen Mitteln und ohne personellen Aufwand eine Ausrichtung der Sendereinheit und der Empfängereinheit eines Lidar-Systems in Bezug aufeinander geprüft, eingestellt und/oder angepasst werden kann. Dies wird erfindungsgemäß dadurch erreicht, dass ein Verfahren zum Kalibrieren und/oder Justieren eines Lidar-Systems geschaffen wird, bei welchem für ein messendes Vergleichen in Bezug auf eine zu Grunde liegende - ein- oder zweidimensional detektierende - Detektoreinheit des Lidar-Systems eine Verteilung aus einem Sichtfeld einfallenden und auf die Detektoreinheit abgebildeten Sekundärlichts, eine Mittenposition und/oder eine Breite der Verteilung als Positionsdaten erfasst und mit erwarteten Positionsdaten mit einer erwarteten Mittenposition und/oder einer erwarteten Verteilung verglichen werden.

Gemäß dem Verfahren zum Kalibrieren und/oder Justieren eines Lidar-Systems beansprucht, wobei
(i) (a) das Lidar-System mit einer Sendereinheit und einer Empfängereinheit ausgebildet ist oder wird, insbesondere mit mutmaßlich gleichem Sichtwinkel und/oder Sichtfeld, und/oder (b) jedem Sichtwinkel der Sendereinheit über die optische Abbildung ein Bereich der zu Grunde liegenden Detektoreinheit zugeordnet ist oder wird,
(ii) für das messende Vergleichen ein Sichtfeld der Empfängereinheit mit einem Sichtfeld der Sendereinheit oder entsprechend korrespondierende Teile der Sichtfelder davon miteinander messend verglichen werden,
(iii) aufgrund eines Ergebnisses des Vergleichens eine für ein Maß an Abweichung der Sichtfelder der Sendereinheit und der Empfängereinheit oder der entsprechenden Teile charakteristische Abweichungsgröße bestimmt und/oder bereitgestellt wird und
(iv) aufgrund eines Werts der Abweichungsgröße eine für ein Maß für eine erforderliche Änderung einer Ausrichtung mindestens eines der Sichtfelder der Sendereinheit und der Empfängereinheit oder der entsprechenden Teile charakteristische Korrekturgröße bestimmt und/oder bereitgestellt wird und
   - wobei eine Unterscheidung getroffen wird zwischen einem Nutzsignal aus reflektiertem Sekundärlicht (58) und Hintergrundrauschen durch Verwenden (i) eines Schwellenwerts für einen Signalpegel und/oder (ii) eines Koinzidenzfilters.

Dies bedeutet unter anderem, dass im Betrieb durch die Sendereinheit Primärlicht in das Sichtfeld ausgesandt, dort gegebenenfalls reflektiert und als Sekundärlicht von der Empfängereinheit erfasst und dort detektiert wird. Dabei wird aufgrund der Ausrichtung von Sendereinheit und Empfängereinheit zueinander für einen jeweiligen Sichtwinkel, Raumwinkel oder Blickwinkel der Sendereinheit und der Empfängereinheit eine bestimmte Intensitätsverteilung des empfangenden Sekundärlichts an oder in der zu Grunde liegenden Detektoranordnung erwartet, also mit bestimmten Intensitäten oder Verteilungen an bestimmten Detektorpositionen, zum Beispiel im Sinne von aus Einzelkanälen und Mikropixeln aufgebauten Makropixeln. Aufgrund der Abweichung von Form und Lage der tatsächlich gemessenen Verteilung von der erwarteten Form und Lage einer Verteilung, die sich ergäben, wenn Sendereinheit und Empfängereinheit in einer gewünschten Weise und insbesondere optimal aufeinander ausgerichtet wären, kann dann auf das Maß einer Dejustage und weiterhin auf das Maß einer notwendigen Rejustage oder Anpassung der Ausrichtung von Sendereinheit und Empfängereinheit in Bezug aufeinander geschlossen werden.

Des Weiteren wird entsprechend einem Wert der Korrekturgröße die Ausrichtung mindestens eines der Sichtfelder der Sendereinheit und der Empfängereinheit oder der entsprechenden Teile geändert werden.

Die Unteransprüche zeigen bevorzugte Weiterbildungen der Erfindung.

Einerseits ist es denkbar, dass gemäß einem anderen Ausführungsbeispiel des erfindungsgemäßen Verfahrens die Änderung einer Ausrichtung elektrisch/elektronisch erfolgt, zum Beispiel durch Anpassen (i) der Auswertung und/oder Zuordnung einer zu Grunde liegenden Detektoreinheit und/oder seiner Teile zu einer Auswertung, zum Beispiel in Form von einzelnen Detektorelementen, Sensorelementen, einzelnen photoelektrischen Dioden oder Gruppen davon.

Alternativ oder zusätzlich ist es denkbar, dass die Änderung einer Ausrichtung (ii) durch Ändern einer Zuordnung einer zu Grunde liegenden Detektoreinheit und/oder seiner Teile erfolgt, zum Beispiel im Sinne von einzelnen Detektorelementen, Sensorelementen, einzelnen photoelektrischen Dioden oder Gruppen davon, zum Sichtfeld der Empfängereinheit und/oder zu deren Teilen.

In diesem Zusammenhang können Teile eines Sichtfeldes auch aufgefasst werden als Sichtwinkel, Blickwinkel oder entsprechende Winkelbereiche oder Raumwinkelbereiche.

Neben diesen rein elektrischen, elektronischen, schaltungstechnischen oder "organisatorischen" Anpassungen, sind auch Anpassungen auf der mechanischen und/oder optischen Ebene denkbar.

So ist es gemäß einer anderen vorteilhaften Weiterbildung des erfindungsgemäßen Verfahrens denkbar, dass die Änderung einer Ausrichtung mechanisch und/oder optisch erfolgt durch Ansteuern einer mechanischen und/oder optischen Verstelleinheit.

Dabei kann die jeweilige Verstelleinheit eingerichtet sein und verwendet werden zum Anpassen (i) der Lage, Ausrichtung und/oder Orientierung einer zu Grunde liegenden Detektoreinheit und/oder seiner Teile und/oder (ii) der optischen Abbildung von Sekundärlicht aus dem Sichtfeld auf eine zu Grunde liegende Detektoreinheit und/oder seine Teile.

Es ist also insbesondere denkbar, die optischen Komponenten, die zur Abbildung des Sekundärlichts auf die Detektoreinheit führen, für eine Neujustage oder Rejustage einzustellen, zum Beispiel durch mechanisches Bewegen und Ausrichten einzelner optischer Komponenten.

Ein besonders hohes Maß an Genauigkeit beim Prozess des messenden Vergleichens stellt sich gemäß einer anderen Ausgestaltungsform des erfindungsgemäßen Verfahrens dann ein, wenn eine Verteilung des Sekundärlichts auf der Detektoreinheit und/oder eine Mittenposition der Verteilung ermittelt wird bzw. werden durch Abtasten einer Mehrzahl von Makropixeln der Detektoreinheit, die insbesondere einen oder mehrere Einzelkanäle mit einer Mehrzahl von Mikropixeln in Form von Detektorelementen aufweisen.

Grundsätzlich ist es möglich, das erfindungsgemäße Verfahren während des und/oder parallel zum eigentlichen Betrieb des zu Grunde liegenden Lidar-Systems auszuführen oder anzuwenden.

Alternativ oder zusätzlich ist es auch denkbar, dass das erfindungsgemäße Verfahren als separater Vorgang - insbesondere unter Zwischenspeicherung und/oder zu einem späteren Zeitpunkt nach dem Messvorgang - zu einem normalen Betrieb des zu Grunde liegenden Lidar-Systems.

Das erfindungsgemäße Verfahren kann also als Teil eines Betriebsverfahrens des zu Grunde liegenden Lidar-Systems ausgeführt werden, dies ist jedoch nicht zwingend erforderlich.

Ferner betrifft die vorliegende Erfindung auch eine Steuereinheit für ein LiDAR-System, welche eingerichtet ist, in einem zu Grunde liegenden LiDAR-System eine Ausführungsform des erfindungsgemäßen Verfahrens zu initiieren, auszuführen, ablaufen zu lassen, zu regeln und/oder zu steuern.

Des Weiteren schafft die vorliegende Erfindung auch ein LiDAR-System als solches. Dieses ist ausgebildet mit einer Sendereinheit zum Erzeugen und Aussenden von Primärlicht in ein Sichtfeld zu dessen Beleuchtung und mit einer Empfängereinheit zum Empfangen, Detektieren und Auswerten von Sekundärlicht aus dem Sichtfeld.

Ferner ist das Lidar-System dazu eingerichtet ist, mit einem erfindungsgemäß ausgestalteten Verfahren verwendet zu werden und/oder von einem derartigen Verfahren gesteuert oder geregelt zu werden.

Zusätzlich oder alternativ weist das Lidar-System eine erfindungsgemäß ausgestaltete Steuereinheit auf, welche zum Steuern des Betriebs der Sendereinheit und/oder der Empfängereinheit des zu Grunde liegenden Lidar-Systems eingerichtet ist. Schließlich wird durch die vorliegende Erfindung auch eine Arbeitsvorrichtung geschaffen, welche mit einem erfindungsgemäßen LiDAR-System ausgebildet ist.

Die Arbeitsvorrichtung kann insbesondere als Fahrzeug ausgebildet sein.

### Kurzbeschreibung der Figuren

Unter Bezugnahme auf die beigefügten Figuren werden Ausführungsformen der Erfindung im Detail beschrieben.
- Figur 1: zeigt schematisch eine Darstellung einer Ausführungsformen eines erfindungsgemäß ausgestalteten LiDAR-Systems, welches im Zusammenhang mit dem erfindungsgemäßen Verfahren eingesetzt werden kann,
- Figuren 2A und 2B: erläutern anhand schematischer Ansichten die Problemstellung hinsichtlich der Intensitätsverteilung von Sekundärlicht am Detektor bei Justage und Dejustage zwischen Sendereinheit und Empfängereinheit,
- Figur 3: erläutert anhand eines Graphen schematisch die Lage einer Intensitätsverteilung von Sekundärlicht am Detektor bei Justage und Dejustage zwischen Sendereinheit und Empfängereinheit, und
- Figuren 4 und 5: erläutern anhand eines Graphen bzw. eines schematischen Blockschaltbildes Aspekte des Unterscheidens zwischen Nutzsignal und Hintergrundrauschen.

### Bevorzugte Ausführungsformen der Erfindung

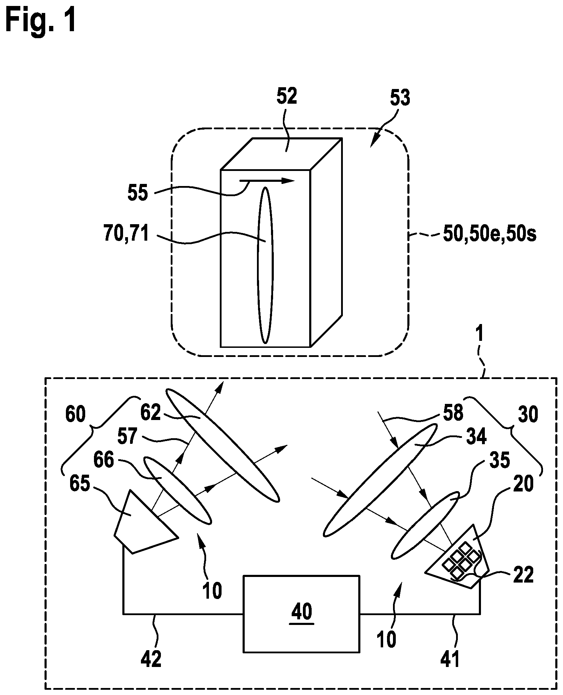

Nachfolgend werden unter Bezugnahme auf die Figuren 1 bis 5 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet.

Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt schematisch eine Darstellung einer Ausführungsformen eines erfindungsgemäß ausgestalteten LiDAR-Systems 1 welches im Zusammenhang mit dem erfindungsgemäßen Betriebsverfahren eingesetzt werden kann.

Verschiedene Aspekte des in Figur 1 dargestellten erfindungsgemäßen Lidar-Systems 1 sind bereits auch bei herkömmlichen Lidar-Systemen enthalten.

Bei aktuellen LiDAR-Sensoren wird während der Fertigung eine mechanische Ausrichtung und Justage der Sendereinheit 60 und insbesondere der Lichtquelleneinheit 65 und z.B. eines Lasers und der Empfangseinheit 30 zueinander vorgenommen. Die Komponenten werden dabei fixiert, z.B. geklebt oder geschraubt. Die gegenseitige Ausrichtung kann im Betrieb herkömmlicherweise nicht erfasst werden. Bauteil- und Justagetoleranzen werden kompensiert, indem z.B. die Bildgröße empfängerseitig größer ausgelegt wird als die Divergenz der zu Grunde Lichtquelleneinheit 65 und insbesondere des dort verwendeten Lasers als Lichtquelle der Lichtquelleneinheit 65.

Mechanische Toleranzen und thermisch bedingte Positionsänderungen können zu einer erheblichen Reduktion der Leistungsfähigkeit oder Performance - unter anderem bei der Reichweite - des LiDAR-Systems 1 über Lebenszeit und in Abhängigkeit von der Temperatur führen.

Dies wird herkömmlicherweise bisher durch eine Übererfüllung der zu Grunde liegenden Spezifikation bei Raumtemperatur, ein enges Temperaturfenster oder über einen Toleranzvorhalt kompensiert, was zu zusätzlichen Kosten bzw. einer Reduktion der Nominalperformance führt.

Diese Nachteile können erfindungsgemäß vermieden werden.

Zunächst soll das in Figur 1 dargestellte allgemeine erfindungsgemäß ausgebildete LiDAR-System 1 erläutert werden.

Dieses weist eine Sendereinheit 60, die auch als Senderoptik aufgefasst werden kann, sowie eine Empfängereinheit 30 auf, welche auch als Empfängeroptik aufgefasst werden kann.

In vorteilhafter Weise ist eine Steuereinheit 40 ausgebildet, mit welcher die Sendereinheit 60 und die Empfängereinheit 30 über Erfassungs- und Steuerleitungen 41 bzw. 42 wirkverbunden sind.

Die Sendereinheit 60 weist eine Lichtquelleneinheit 65 zum Erzeugen und Aussenden von Primärlicht 57, eine Strahlformungsoptik 66 zur Strahlformung sowie eine Ablenkoptik 62 zum eigentlichen Aussenden des Primärlichts 57 in das Sichtfeld 50 mit der Szene 53, welche zum Beispiel ein Objekt 52 enthalten kann, auf.

Grundsätzlich kann das Sichtfeld 50 im Zusammenhang mit dem eigentlichen Sichtfeld 50s der Sendereinheit 60 und dem Sichtfeld 50e der Empfängereinheit 30 betrachtet werden.

Die Empfängereinheit 30 weist eine Primäroptik 34, zum Beispiel nach Art eines Objektivs, und eine Sekundäroptik 35, zum Beispiel mit einer empfängerseitigen Fokussieroptik, auf.

Primäroptik 34 und Sekundäroptik 35 der Empfängereinheit 30 dienen dazu, das aus dem Sichtfeld 50 empfangene Sekundärlicht 58 auf eine Detektoranordnung 20 für eine Detektion mit einer Mehrzahl von Sensorelementen 22 oder Detektorelementen abzubilden.

Im weiteren Betrieb des Lidar-Systems 1 ruft eine senderseitige Verschwenkbewegung 55 ein Überstreichen des Lichtfelds 70 im Sichtfeld 50 hervor. Gegebenenfalls kann also mittels einer senderseitigen Schwenkbewegung, zum Beispiel im Sinne einer Abtastbewegung oder Scanbewegung 73 ein Überstreichen eines Linienlichtfelds 71 über die Szene 53 im Sichtfeld 50 bewirkt werden, zum Beispiel in horizontaler Richtung.

Dabei werden innerhalb und/oder außerhalb des Betriebs des LiDAR-Systems 1 erfindungsgemäß empfängerseitig innerhalb der Detektoranordnung 20 mit den einzelnen Detektorelementen oder Sensorelementen 22, zum Beispiel insgesamt aufgefasst als Empfängerchip, die Verteilung empfangenden Sekundärlichts 58 und/oder deren Mittenposition in Bezug auf die Anordnung der Detektorelemente 22 erfasst, zum Beispiel als Positionsdaten. Aufgrund der Ausrichtung des senderseitigen Sichtfeldes 50s und des empfängerseitigen Sichtfeldes 50e oder von korrespondierenden Teilen davon zueinander und/oder durch die Zuordnung entsprechender senderseitiger Blickwinkel oder Intervalle senderseitiger Blickwinkel zu Bereichen der Detektoranordnung 20 und der Mehrzahl der Detektorelemente 22 wird erfindungsgemäß eine Verteilung mit einer entsprechenden Mittenposition der Verteilung auf der Mehrzahl der Detektorelemente 22 erwartet und kann mit der tatsächlich gemessenen Verteilung und Mittenposition verglichen werden, um daraus eine für die Abweichung der tatsächlichen Ausrichtung von einer gewünschten Ausrichtung charakteristische Größe abzuleiten, die dann für eine Anpassung der Ausrichtung der Sendereinheit 60 und der Empfängereinheit 30 zueinander genutzt werden kann.

Ein Kernaspekt gemäß einer Sichtweise der vorliegenden Erfindung besteht in dem Vorsehen, Ausbilden und Verwenden eines Messvorgangs, gegebenenfalls mit einer Messeinrichtung, zum Beispiel innerhalb eines zu Grunde liegenden Empfangschips, aufgefasst als erfindungsgemäße Detektoranordnung 20 mit einer Mehrzahl von Detektorelementen oder Sensorelementen 22, zur Erfassung einer Mittenposition und/oder Verteilung des aus der Umgebung rückreflektierten und als Sekundärlicht 58 aus der Reflexion des Laserlichts der Sendereinheit 60 empfangenen Lichts.

Diese Informationen über Verteilung und Mittenposition des empfangenen Sekundärlichts werden, wie dies oben bereits erwähnt wurde, als Positionsdaten aufgefasst und sind erheblich von der gegenseitigen Ausrichtung von Sender 60 und Empfänger 30 des Lidar-Systems 1 abhängig.

Gemäß einer Ausführungsform der vorliegenden Erfindung können diese Positionsdaten parallel zu normalen LiDAR-Messungen erfasst und für eine Bewertung und/oder Positionsnachstellung genutzt werden.

Die Positionsnachtstellung kann entweder (i) mechanisch-optisch (z.B. vermittelt über die Spiegelposition) oder (ii) elektrisch oder elektronisch (z.B. Nutzung andere Empfangspixel) vorgenommen werden.

Ein Vorteil beim erfindungsgemäßen Vorgehen besteht darin, dass auch über die Lebenszeit und Temperaturänderungen eine spezifizierte Reichweite erreicht werden kann, ohne dass ein Toleranzvorhalt vorgenommen werden muss. Außerdem kann in der Fertigung unter Umständen komplett auf einen üblicherweise vorzunehmenden initialen Ausrichtungsschritt verzichtet werden.

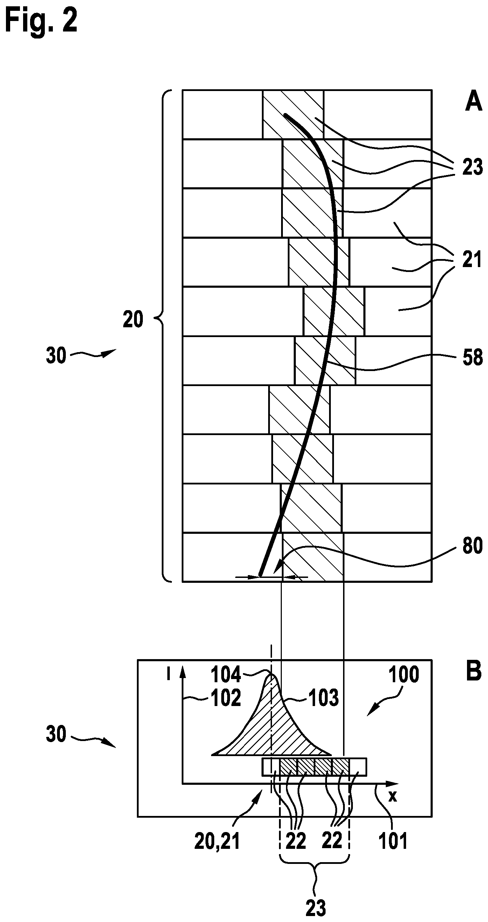

Figur 2 erläutert mit den Teilfiguren 2A und 2B in Draufsicht bzw. geschnittener Seitenansicht beispielhaft die Problemstellung.

Das Sekundärlicht 58 aus dem Sichtfeld 50 trifft auf den Empfänger 30 und insbesondere auf die Detektoranordnung 20 mit der Mehrzahl von Detektorelementen oder Sensorelementen 22. Der Ort und die Breite der Intensitätsverteilung können sich innerhalb der Empfangszeilen 21, die jeweils einem Pixel entsprechen, unterscheiden kann.

Dargestellt sind dabei die verschiedenen Detektorzeilen 21 der Detektoranordnung 20, wobei jede Zeile 21 als Pixel fungiert und von einer Mehrzahl von Detektorelementen 22 gebildet wird. Dargestellt ist auch jeweils ein initiales Makropixel 23, welches ebenfalls von einer Mehrzahl zusammenhängend angeordneter Detektorelemente 22 gebildet wird und welches als zentrales Element die erwartete Mittenposition einer Verteilung empfangenden Sekundärlichts 58 repräsentiert.

Tatsächlich kann jedoch eine Abweichung 80, zum Beispiel im Sinne einer räumlichen Trennung der tatsächlichen Mittenposition der Verteilung des Sekundärlichts 58 im Vergleich zu erwarteten Mittenposition, repräsentiert durch das initiale Makropixel 23 auftreten, wie dies in der untersten Zeile der Darstellung der Figur 2A gezeigt ist.

Die Querschnittsdarstellung Figur 2B zeigt beispielhaft nach Art eines Graphen 100 mit der Spur 103 die Verteilung der Intensität I des Sekundärlichts 58 als Funktion des Ortes, wobei letzterer über die Anordnung der einzelnen Pixel 22 insbesondere durch die Position des initialen Makropixels 23 repräsentiert wird. Die Mittenposition 104 der Verteilung 103 liegt deutlich außerhalb des initialen Makropixels 23 und seine Lage in Bezug auf das Makropixel 23 kann genutzt werden, um die Abweichung der Justage zwischen Sendereinheit 60 und Empfängereinheit 30 quantitativ zu fassen.

Im Zusammenhang mit dem Graphen 100 der Figur 2B ist auf der Abszisse 101 der Ort x, repräsentiert durch die Position der Detektorelemente 22 oder Mikropixel 22, und auf der Ordinate 102 die Intensität I des in der Detektoranordnung 20 empfangenden Sekundärlichts 58 aufgetragen.

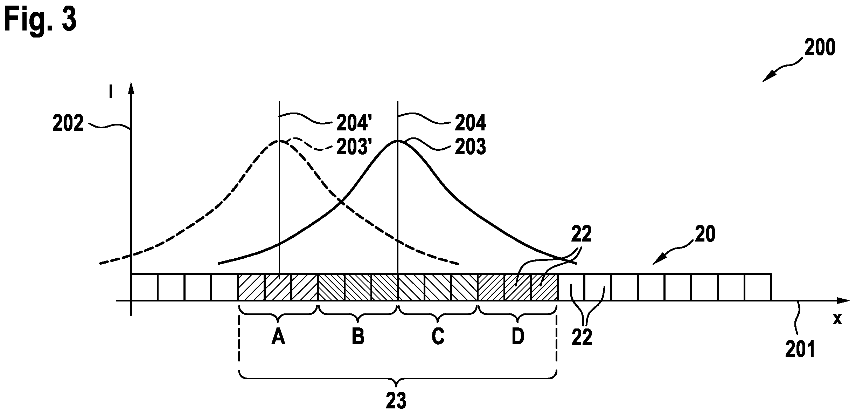

In der vorgestellten Lösung kann beispielhaft die Lichtverteilung durch Abtastung oder Sampling des empfangenen Signals durch vier Kanäle A bis D, die ein Makropixel 23 mit einzelnen Detektorelementen oder Mikropixeln 22 bilden, erzeugt werden, wie dies im Zusammenhang mit dem Graphen 200 der Figur 3 dargestellt ist. Damit können sowohl Mittenposition, die Breite und auch die Schiefe der Verteilung 103 des Sekundärlichts 58 ermittelt werden, um die Qualität der Justage den Grad der Dejustage zwischen Sendereinheit 60 und Empfängereinheit 30 zu ermitteln und quantitativ zu fassen.

Im Zusammenhang mit dem Graphen 200 der Figur 3 sind auf der Abszisse 201 der Ort x, wieder repräsentiert durch die Position der einzelnen Detektorelemente 22, aufgefasst als Mikropixel, und auf der Ordinate 202 die Intensität I des in der Detektoranordnung 20 empfangenden Sekundärlichts 58 aufgetragen. Die Spur 203 zeigt die Intensitätsverteilung für eine gewünschte Ausrichtung zwischen Sendereinheit 60 und Empfängereinheit 30, wobei die Mittenposition 204 der Intensitätsverteilung 203 in der Mitte des aus den Kanälen A bis D bestehenden Makropixels 23 liegt.

Die Verteilung 203' zeigt dagegen eine Mittenposition 204' mit Hauptlage auf dem Kanal A, woraus aus dem Abstand zwischen den Mittenpositionen 204 und 204' auf den Grad der Dejustage zwischen der Sendereinheit 60 und der Empfängereinheit 30 geschlossen werden kann.

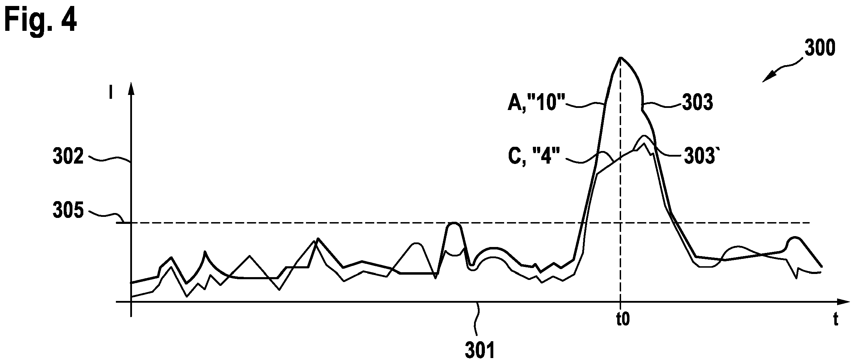

Die Unterscheidung des reflektierten Nutzsignals - also des Sekundärlichts 58, welches aus der Reflexion des Primärlichts 57 aus dem Sichtfeld 50 stammt - zum Hintergrundrauschen kann z.B. durch ein Schwellwertverfahren gemäß dem Grafen 300 aus Figur 4 oder einen Koinzidenzfilter stattfinden.

Im Zusammenhang mit dem Graphen 300 aus Figur 4 ist auf der Abszisse 301 die Zeit t und auf der Ordinate 302 die Intensität I des in der Detektoranordnung 20 empfangenden Sekundärlichts 58 aufgetragen. Zu einem gegebenen Zeitpunkt t0 wird in der Detektoranordnung 20 in den verschiedenen Kanälen A bis D das Sekundärlicht 58 detektiert. Die Spuren 303 und 303' demonstrieren den zeitlichen Verlauf des Empfangssignals für die Intensität I in den Kanälen A C. Aus dem Vergleich der Maxima mit den relativen Intensitätsangaben "4" und "10" zum Zeitpunkt t0 lässt sich ableiten, dass die Mittenposition der detektierten Intensitätsverteilung etwa dem Verlauf 203' mit der Mittenposition 204' aus Figur 3 entspricht.

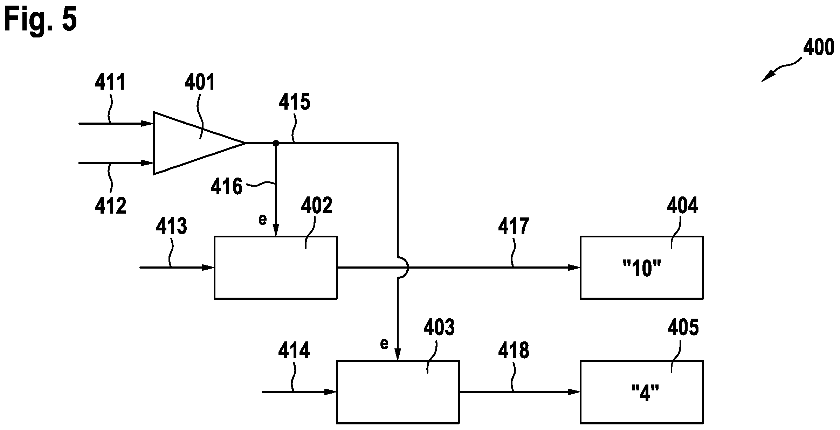

Dargestellt ist dabei noch der Schwellenwert 305 zur Diskriminierung zwischen Nutzsignal und dem Basisrauschen. Es werden dabei nur Signale als Detektionssignal zugelassen, die oberhalb des Schwellenwerts 305 liegen Figur 5 zeigt nach Art eines schematischen Blockdiagramms eine Auswertelogik 400 zur Ermittlung der Lichtverteilung aus einer Zweikanalmessung, wie sie im Zusammenhang mit Figur 4 dargestellt wurde.

Das abgetastete Signal kann als Digitalsignal zur Laufzeit ausgewertet werden, wie dies im Zusammenhang mit der Auswertelogik 400 der Figur 5 dargestellt ist, oder erst gespeichert und danach verarbeitet werden. Da die Positionsbestimmung parallel zur LiDAR-Messung erfolgen kann, kann diese über das gesamte Sichtfeld oder FoV 50 vorgenommen werden. Die Korrektur kann damit auch richtungsabhängig (horizontal und vertikal) die Position und Größe des Empfängers 30 nachführen.

Im Zusammenhang mit dem Blockdiagramm der Figur 5 und der dort dargestellten Auswertelogik 400 ist zu bemerken, dass dort ein Komparator 401 im Zusammenwirken mit einem ersten Zähler 402 und einem dritten Zähler 403 ausgebildet sind.

Den Eingängen 411 und 412 des Komparators 401 werden der aktuelle Wert des betrachteten Makropixels 23 und ein für den Rauschpegel repräsentativer Wert zugeführt. Der Vergleich entscheidet darüber, ob der erfasste Messwert oberhalb des Schwellenwerts für die Rauschanalyse liegt oder nicht und entsprechend darüber, ob ein Enablesignal e am Ausgang 415, 416 des Komparators vierten 1 erscheint und an die ersten und zweiten Zähler 402 und 403 ausgegeben wird, um die an deren Eingängen 413 bzw. 414 anliegenden Signale linker und rechter Kanäle zur Summation zu berücksichtigen, so dass im Ergebnis an den Ausgängen 417 bzw. 418 der ersten und zweiten Zähler 402 bzw. 403 die Ergebnisse 404 bzw. 405 mit den Werten "10" bzw. "4" erscheinen.

## Patentansprüche

1. Verfahren zum Kalibrieren und/oder Justieren eines Lidar-Systems (1), bei welchem für ein messendes Vergleichen in Bezug auf eine zu Grunde liegende - ein- oder zweidimensional detektierende - Detektoreinheit (20) eine Verteilung aus dem Sichtfeld (50, 50e) einfallenden und auf die Detektoreinheit (20) abgebildeten Sekundärlichts (58) und eine Mittenposition und/oder eine Breite der Verteilung als Positionsdaten erfasst und mit erwarteten Positionsdaten mit einer erwarteten Mittenposition und/oder einer erwarteten Verteilung verglichen werden, wobei:
(i) (a) das Lidar-System (1) mit einer Sendereinheit (60) und einer Empfängereinheit (30) ausgebildet ist, insbesondere mit mutmaßlich gleichem Sichtwinkel und/oder Sichtfeld (50, 50e, 50s), und/oder (b) jedem Sichtwinkel der Sendereinheit (60) über die optische Abbildung ein Bereich der zu Grunde liegenden Detektoreinheit (20) zugeordnet ist oder wird,
(ii) für das messende Vergleichen ein Sichtfeld (50e) der Empfängereinheit (30) mit dem Sichtfeld (50s) der Sendereinheit (60) oder entsprechend korrespondierende Teile der Sichtfelder (50e, 50s) davon miteinander messend verglichen werden,
(iii) aufgrund eines Ergebnisses des Vergleichens eine für ein Maß an Abweichung der Sichtfelder (50e, 50s) der Sendereinheit (60) und der Empfängereinheit (30) oder der entsprechenden Teile charakteristische Abweichungsgröße bestimmt wird und
(iv) aufgrund eines Werts der Abweichungsgröße eine für ein Maß für eine erforderliche Änderung einer Ausrichtung mindestens eines der Sichtfelder (50e, 50s) der Sendereinheit (60) und der Empfängereinheit (30) oder der entsprechenden Teile charakteristische Korrekturgröße bestimmt und bereitgestellt wird,
- wobei entsprechend einem Wert der Korrekturgröße eine Ausrichtung mindestens eines der Sichtfelder (50e, 50s) der Sendereinheit (60) und der Empfängereinheit (30) oder der entsprechenden Teile geändert wird und
- wobei eine Unterscheidung getroffen wird zwischen einem Nutzsignal aus reflektiertem Sekundärlicht (58) und Hintergrundrauschen durch Verwenden (i) eines Schwellenwerts für einen Signalpegel und/oder (ii) eines Koinzidenzfilters.

2. Verfahren nach Anspruch 1, bei welchem eine Änderung der Ausrichtung elektrisch/elektronisch erfolgt (i) durch Anpassen der Auswertung einer zu Grunde liegenden Detektoreinheit (20) und/oder seiner Teile (22) und/oder (ii) durch Anpassen einer Zuordnung einer zu Grunde liegenden Detektoreinheit (20) und/oder seiner Teile (20) zum Sichtfeld (50e) der Empfängereinheit (30) und/oder zu deren Teilen.

3. Verfahren nach einem der vorangehenden Ansprüche, bei welchem eine Änderung der Ausrichtung mechanisch und/oder optisch erfolgt durch Ansteuern einer mechanischen und/oder optischen Verstelleinheit zum Anpassen (i) einer Lage, Ausrichtung und/oder Orientierung einer zu Grunde liegenden Detektoreinheit (20) und/oder seiner Teile (22) und/oder (ii) einer optischen Abbildung von Sekundärlicht (58) aus dem Sichtfeld (50) auf eine zu Grunde liegende Detektoreinheit (20) und/oder seine Teile (20).

4. Verfahren nach einem der vorangehenden Ansprüche, bei welchem eine Verteilung des Sekundärlichts (58) auf der Detektoreinheit (20) und/oder eine Mittenposition der Verteilung ermittelt wird bzw. werden durch Abtasten einer Mehrzahl von Makropixeln der Detektoreinheit (20), die insbesondere einen oder mehrere Einzelkanäle mit einer Mehrzahl von Mikropixeln in Form von Detektorelementen (22) aufweisen.

5. Verfahren nach einem der vorangehenden Ansprüche, welches:
- während eines und/oder parallel zu einem normalen Betrieb des zu Grunde liegenden Lidar-Systems (1) und/oder
- als separater Vorgang - insbesondere unter Zwischenspeicherung und/oder zu einem späteren Zeitpunkt nach dem Messvorgang -
zu einem normalen Betrieb des zu Grunde liegenden Lidar-Systems (1) und insbesondere als Teil eines Betriebsverfahrens des zu Grunde liegenden Lidar-Systems (1) ausgeführt wird.

6. Steuereinheit (40) für ein LiDAR-System (1), welche eingerichtet ist, in einem zu Grunde liegenden LiDAR-System (1) ein Verfahren nach einem der Ansprüche 1 bis 5 zu initiieren, auszuführen, ablaufen zu lassen, zu regeln und/oder zu steuern.

7. LiDAR-System (1),
- welches ausgebildet ist
- mit einer Sendereinheit (60) zum Erzeugen und Aussenden von Primärlicht (57) in ein Sichtfeld (50) zu dessen Beleuchtung und
- mit einer Empfängereinheit (30) zum Empfangen, Detektieren und Auswerten von Sekundärlicht (58) aus dem Sichtfeld (50), und
- welches eine Steuereinheit (40) nach Anspruch 6 aufweist, welche zum Steuern des Betriebs der Sendereinheit (60) und/oder der Empfängereinheit (30) eingerichtet ist.

8. Arbeitsvorrichtung, welche mit einem LiDAR-System (1) nach Anspruch 7 und welche insbesondere als Fahrzeug ausgebildet ist.

## Claims

1. Method for calibrating and/or adjusting a lidar system (1), wherein a measuring comparison with regard to an underlying - one- or two-dimensionally detecting - detector unit (20) involves a distribution of secondary light (58) that is incident from the field of view (50, 50e) and imaged on the detector unit (20) and a centre position and/or a width of the distribution being acquired as position data and compared with expected position data comprising an expected centre position and/or an expected distribution, wherein:
(i) (a) the lidar system (1) is produced with a transmitter unit (60) and a receiver unit (30), in particular having supposedly the same viewing angle and/or field of view (50, 50e, 50s), and/or (b) each viewing angle of the transmitter unit (60) has an associated, or is assigned a, region of the underlying detector unit (20) by way of the optical image;
(ii) the measuring comparison involves a field of view (50e) of the receiver unit (30) being compared with the field of view (50s) of the transmitter unit (60), or accordingly corresponding portions of the fields of view (50e, 50s) of said units being compared with one another, by measurement,
(iii) a result of the comparison is taken as a basis for determining a difference variable that is characteristic of a measure of difference between the fields of view (50e, 50s) of the transmitter unit (60) and the receiver unit (30) or between the relevant portions, and
(iv) a value of the difference variable is taken as a basis for determining and providing a correction variable that is characteristic of a measure of a required change in an alignment of at least one of the fields of view (50e, 50s) of the transmitter unit (60) and the receiver unit (30) or of the relevant portions,
- wherein a value of the correction variable is used to change an alignment of at least one of the fields of view (50e, 50s) of the transmitter unit (60) and the receiver unit (30) or of the relevant portions, and
- wherein a distinction is drawn between a useful signal comprising reflected secondary light (58) and background noise by using (i) a threshold value for a signal level and/or (ii) a coincidence filter.

2. Method according to Claim 1, wherein a change in the alignment is made electrically/electronically (i) by adjusting the evaluation of an underlying detector unit (20) and/or its parts (22) and/or (ii) by adjusting an association of an underlying detector unit (20) and/or its parts (20) with the field of view (50e) of the receiver unit (30) and/or with the parts thereof.

3. Method according to either of the preceding claims, wherein a change in the alignment is made mechanically and/or optically by actuating a mechanical and/or optical adjustment unit to adjust (i) an attitude, alignment and/or orientation of an underlying detector unit (20) and/or its parts (22) and/or (ii) an optical image of secondary light (58) from the field of view (50) on an underlying detector unit (20) and/or its parts (20).

4. Method according to one of the preceding claims, wherein a distribution of the secondary light (58) over the detector unit (20) and/or a centre position of the distribution is or are determined by scanning a plurality of macropixels of the detector unit (20), which have in particular one or more individual channels comprising a plurality of micropixels in the form of detector elements (22).

5. Method according to one of the preceding claims, which is carried out: -
during and/or in parallel with normal operation of the underlying lidar system (1) and/or - as a separate process - in particular with intermediate storage and/or at a later time after the measurement process - from normal operation of the underlying lidar system (1) and in particular as part of a method of operation of the underlying lidar system (1).

6. Control unit (40) for a LiDAR system (1), which is configured to initiate, carry out, run, regulate and/or control a method according to one of Claims 1 to 5 in an underlying LiDAR system (1).

7. LiDAR system (1),
- which is produced
- with a transmitter unit (60) for generating and emitting primary light (57) into a field of view (50) to illuminate the latter, and
- with a receiver unit (30) for receiving, detecting and evaluating secondary light (58) from the field of view (50), and
which
has a control unit (40) according to Claim 6, which is configured to control the operation of the transmitter unit (60) and/or the receiver unit (30).

8. Work apparatus, which is produced with a LiDAR system (1) according to Claim 7 and which is in particular in the form of a vehicle.

## Revendications

1. Procédé d'étalonnage et/ou d'ajustement d'un système lidar (1) avec lequel, pour une comparaison de mesure en référence à une unité de détection (20) à détection unidimensionnelle ou bidimensionnelle sous-jacente, une distribution de la lumière secondaire (58) incidente dans le champ de vision (50, 50e) et représentée sur l'unité de détection (20) et une position centrale et/ou une largeur de la distribution sont acquises en tant que données de position et sont comparées à des données de position attendues avec une position centrale attendue et/ou une distribution attendue, procédé avec lequel :
(i) (a) le système lidar (1) est constitué d'une unité émettrice (60) et d'une unité réceptrice (30), notamment avec un angle de vision et/ou un champ de vision (50, 50e, 50s) supposés identiques, et/ou (b) une zone de l'unité de détection (20) sous-jacente est ou sera associée à chaque angle de vision de l'unité d'émission (60) par le biais de la représentation optique,
(ii) pour la comparaison de mesure, un champ de vision (50e) de l'unité réceptrice (30) est comparé au champ de vision (50s) de l'unité émettrice (60) ou des parties correspondantes des champs de vision (50e, 50s) de celles-ci par comparaison de mesure,
(iii) sur la base d'un résultat de la comparaison, une grandeur d'écart caractéristique d'un degré d'écart des champs de vision (50e, 50s) de l'unité émettrice (60) et de l'unité réceptrice (30) ou des parties correspondantes est déterminée et
(iv) sur la base d'une valeur de la grandeur d'écart, une grandeur de correction caractéristique d'une mesure pour une modification nécessaire d'un alignement d'au moins l'un des champs de vision (50e, 50s) de l'unité émettrice (60) et de l'unité réceptrice (30) ou des parties correspondantes est déterminée et fournie,
- un alignement d'au moins l'un des champs de vision (50e, 50s) de l'unité émettrice (60) et de l'unité réceptrice (30) ou des parties correspondantes étant modifié en fonction d'une valeur de la grandeur de correction, et
- une distinction étant effectuée entre un signal utile provenant de la lumière secondaire réfléchie (58) et le bruit de fond en utilisant (i) une valeur de seuil pour un niveau de signal et/ou (ii) un filtre de coïncidence.

2. Procédé selon la revendication 1, avec lequel une modification de l'alignement est effectuée électriquement/électroniquement (i) par adaptation de l'évaluation d'une unité de détection (20) sous-jacente et/ou de ses parties (22) et/ou (ii) par adaptation d'une affectation d'une unité de détection (20) sous-jacente et/ou de ses parties (20) au champ de vision (50e) de l'unité réceptrice (30) et/ou à ses parties.

3. Procédé selon l'une des revendications précédentes, avec lequel une modification de l'alignement est effectuée mécaniquement et/ou optiquement par commande d'une unité de positionnement mécanique et/ou optique en vue d'adapter (i) une position, un alignement et/ou une orientation d'une unité de détection (20) sous-jacente et/ou de ses parties (22) et/ou (ii) une représentation optique de lumière secondaire (58) provenant du champ de vision (50) sur une unité de détection (20) sous-jacente et/ou ses parties (20).

4. Procédé selon l'une des revendications précédentes, avec lequel une répartition de la lumière secondaire (58) sur l'unité de détection (20) et/ou une position centrale de la répartition est ou sont déterminées par balayage d'une pluralité de macropixels de l'unité de détection (20), lesquels possèdent notamment un ou plusieurs canaux individuels avec une pluralité de micropixels sous la forme d'éléments de détection (22).

5. Procédé selon l'une des revendications précédentes, lequel est mis en œuvre :
- pendant et/ou parallèlement à un fonctionnement normal du système lidar (1) sous-jacent et/ou
- en tant que processus distinct, notamment avec enregistrement temporaire et/ou à un moment ultérieure après le processus de mesure,
- pour un fonctionnement normal du système lidar (1) sous-jacent et notamment en tant que partie d'un procédé de fonctionnement du système lidar (1) sous-jacent.

6. Unité de commande (40) pour un système LiDAR (1), laquelle est conçue pour initier, mettre en œuvre, laisser se dérouler, réguler et/ou commander un procédé selon l'une des revendications 1 à 5 dans un système LiDAR (1) sous-jacent.

7. Système LiDAR (1),
- lequel est configuré
- avec une unité émettrice (60) destinée à générer et émettre une lumière primaire (57) dans un champ de vision (50) afin de l'éclairer et
- avec une unité réceptrice (30) destinée à recevoir, détecter et évaluer la lumière secondaire (58) provenant du champ de vision (50), et
lequel
possède une unité de commande (40) selon la revendication 6, laquelle est conçue pour commander le fonctionnement de l'unité émettrice (60) et/ou de l'unité réceptrice (30).

8. Dispositif de travail, lequel est configuré avec un système LiDAR (1) selon la revendication 7 et qui est notamment réalisé sous la forme d'un véhicule.
